# EUROPÄISCHE PATENTSCHRIFT

(11) **EP 2 805 208 B1**
(45) Veröffentlichungstag und Bekanntmachung des Hinweises auf die Patenterteilung: **04.08.2021**
(21) Anmeldenummer: 12813044.0
(22) Anmeldetag: 27.12.2012
(51) Int. Cl.: G05B 15/02

(54) **VERFAHREN ZUR DATENKOMMUNIKATION ZWISCHEN EINEM HAUSHALTSGERÄT UND EINEM BENUTZERENDGERÄT, HAUSHALTSGERÄT UND SYSTEM MIT EINEM HAUSHALTSGERÄT UND EINEM BENUTZERENDGERÄT**
METHOD FOR COMMUNICATING DATA BETWEEN A DOMESTIC APPLIANCE AND A USER TERMINAL, A DOMESTIC APPLIANCE, AND A SYSTEM COMPRISING A DOMESTIC APPLIANCE AND A USER TERMINAL
PROCÉDÉ DE COMMUNICATION DE DONNÉES ENTRE UN APPAREIL MÉNAGER ET UN TERMINAL UTILISATEUR, APPAREIL MÉNAGER ET SYSTÈME COMPORTANT UN APPAREIL MÉNAGER ET UN TERMINAL UTILISATEUR

(30) Priorität: 19.01.2012 DE 102012200714
(43) Veröffentlichungstag der Anmeldung: 26.11.2014
(73) Patentinhaber: BSH Hausgeräte GmbH, 81739 München (DE)
(72) Erfinder: BRÖCKER, David, 81241 München (DE); CLAUSS, Jens, 93051 Regensburg (DE)
(86) Internationale Anmeldenummer: PCT/EP2012/076984
(87) Internationale Veröffentlichungsnummer: WO 2013/107604

(56) Entgegenhaltungen:
- EP-A1- 1 753 180
- DE-A1-102007 025 004
- US-A1- 2002 062 365
- US-A1- 2008 224 834
- US-A1- 2008 282 182

## Beschreibung

Die Erfindung betrifft ein Verfahren zur Datenkommunikation zwischen einem Haushaltsgerät einerseits und einem Benutzerendgerät eines Benutzers des Haushaltsgeräts andererseits, wobei im Rahmen der Datenkommunikation Steuerdaten mit Steuerbefehlen von dem Benutzerendgerät an das Haushaltsgerät und/oder Statusdaten mit Informationen über einen aktuellen Zustand des Haushaltsgeräts von dem Haushaltsgerät an das Benutzerendgerät übertragen werden. Die Erfindung betrifft außerdem ein System zum Durchführen eines derartigen Verfahrens mit einem Haushaltsgerät sowie einem Benutzerendgerät.

Es ist bereits Stand der Technik, ein Haushaltsgerät - etwa eine Waschmaschine oder aber einen Wäschetrockner - mithilfe eines von dem Haushaltsgerät separaten Geräts anzusteuern, nämlich beispielsweise mithilfe eines Rechners. So beschreibt beispielsweise das Dokument US 2004/0010327 A1 ein System mit einem Haushaltsgerät sowie einem von dem Haushaltsgerät separaten Rechner. Sowohl der Rechner als auch das Haushaltsgerät sind an ein lokales Datennetzwerk im Haushalt angeschlossen, welches wiederum über ein Gateway an das Internet angebunden ist. Die Steuerung des Haushaltsgeräts erfolgt hier über das lokale Datennetzwerk, wobei zu diesem Zwecke ein Interface von einem Server heruntergeladen wird. Das Benutzerinterface ermöglicht dann die Steuerung des Haushaltsgeräts über das lokale Datennetzwerk. Eine solche Vorgehensweise ist relativ aufwändig, weil ein zusätzliches Gateway bereitgestellt werden muss, welches das Internet-Protokoll in das Kommunikationsprotokoll des lokalen Datennetzwerks übersetzt. Außerdem ist somit eine Steuerung des Haushaltsgeräts von außerhalb des lokalen Datennetzwerks nicht möglich.

Verzichtet man - wie beispielsweise in der US 2002/0062365 A1 vorgeschlagen - wiederum auf das Gateway, besteht eine besondere Herausforderung darin, eine sichere und vor Fremdeingriffen geschützte Datenkommunikation zwischen dem Haushaltsgerät einerseits und dem Benutzerendgerät andererseits zu ermöglichen.

Im Übrigen sei noch auf die DE 10 2007 025 004 A1, US 2008/0282182 A1, US 2008/0224834 A1 und EP 1 753 180 A1 hingewiesen, welche ein Steuerungsprogramm mit austauschbaren Parametern offenbaren.

Es ist Aufgabe der Erfindung, eine Lösung aufzuzeigen, wie bei einem Verfahren der eingangs genannten Gattung die Datenkommunikation zwischen dem Haushaltsgerät und dem Benutzerendgerät besonders sicher vor Fremdeingriffen geschützt werden kann.

Diese Aufgabe wird erfindungsgemäß durch ein Verfahren sowie durch ein System mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren ist zur Datenkommunikation zwischen einem Haushaltsgerät einerseits und einem Benutzerendgerät eines Benutzers des Haushaltsgeräts andererseits ausgelegt. Im Rahmen der Datenkommunikation werden Steuerdaten mit Steuerbefehlen von dem Benutzerendgerät an das Haushaltsgerät und/oder Statusdaten mit Informationen über einen aktuellen Zustand des Haushaltsgeräts von dem Haushaltsgerät an das Benutzerendgerät übertragen. Die Datenkommunikation wird zumindest abschnittsweise - insbesondere vollständig - über das Internet durchgeführt. Es ist vorgesehen, dass über einen Internet-Server die Datenkommunikation zwischen dem Haushaltsgerät und dem Benutzerendgerät erfolgt. Der erfindungsgemäße Effekt wird somit dadurch erzielt, dass die Datenkommunikation zwischen dem Haushaltsgerät einerseits und dem Benutzerendgerät andererseits nicht direkt zwischen den beiden Geräten, sondern unter Vermittlung eines Servers vorgenommen wird. Bei einem derartigen Internet-Server kann es sich beispielsweise um einen eigenen Host-Server des Herstellers des Haushaltsgeräts handeln; alternativ kann auch vorgesehen sein, dass der Server ein so genannter "Wolken-Server" (cloud server) ist, welcher unabhängig von dem Gerätehersteller betrieben und angeboten wird. Die erfindungsgemäße Vorgehensweise ermöglicht eine besonders sichere und zuverlässige Datenkommunikation zwischen dem Haushaltsgerät und dem Benutzerendgerät bzw. eine besonders sichere Fernsteuerung des Haushaltsgeräts mithilfe des Benutzerendgeräts und/oder eine besonders sichere Fernüberwachung des aktuellen Zustands des Haushaltsgeräts. Die Datenkommunikation kann nämlich durch den Internet-Server besonders wirkungsvoll vor Fremdeingriffen geschützt werden, sodass die Fernsteuerung des Haushaltsgeräts und/oder die Fernüberwachung des Haushaltsgeräts besonders sicher, auch von außerhalb des Haushalts, vorgenommen werden kann. Der Internet-Server kann nämlich die gesamte Datenkommunikation zwischen dem Haushaltsgerät und dem Benutzerendgerät koordinieren und nach Erkennen eines unbefugten Zugriffs die Datenkommunikation jederzeit unterbrechen.

Bei dem Benutzerendgerät kann es sich grundsätzlich um ein beliebiges Endgerät des Benutzers handeln. Es erweist sich dabei als besonders vorteilhaft, wenn unter dem Benutzerendgerät ein tragbares Kommunikationsgerät des Benutzers verstanden wird, wie beispielsweise ein Mobiltelefon (Smartphone), ein Notebook oder aber ein anderes tragbares bzw. mobiles Rechengerät. Es kann somit die Tatsache genutzt werden, dass auf dem Markt bereits eine Vielzahl von verschiedensten tragbaren Kommunikationsgeräten vorhanden sind, die über eine relativ große Rechenleistung verfügen und außerdem eine Kommunikation über das Internet ermöglichen. Zur Steuerung des Haushaltsgeräts über das Internet kann somit ein ohnehin vorhandenes Gerät des Benutzers genutzt werden, nämlich beispielsweise sein Mobiltelefon. Dazu kann beispielsweise lediglich eine neue Anwendung bzw. Applikation auf dem Benutzerendgerät installiert werden, welche dann die Kommunikation mit dem Internet-Server und hierdurch mit dem Haushaltsgerät ermöglicht, oder aber der Benutzer kann einen auf jedem Smartphone ohnehin bereits vorinstallierten Browser nutzen, um sich auf dem Internet-Server einzuloggen und über den Internet-Server die Steuerdaten an das Haushaltsgerät zu übertragen und/oder die Statusdaten abzurufen.

Wie bereits ausgeführt, können im Rahmen der Datenkommunikation Steuerdaten und/oder Statusdaten übertragen werden. Während die Steuerdaten von dem Benutzerendgerät über den Internet-Server an das Haushaltsgerät übertragen werden, werden die Statusdaten von dem Haushaltsgerät über den Internet-Server an das Benutzerendgerät und somit an den Benutzer übermittelt. Bei den Steuerdaten kann es sich um Steuerbefehle handeln, aufgrund derer beispielsweise ein Betriebsprogramm des Haushaltsgeräts ausgewählt wird und/oder ein Betriebsprozess des Haushaltsgeräts gemäß einem ausgewählten Programm gestartet wird und/oder ein bereits gestarteter Betriebsprozess abgebrochen bzw. beendet wird. Die Statusdaten hingegen können Informationen über den aktuellen Status des Haushaltsgeräts beinhalten, wie beispielsweise Informationen über die Restzeit eines begonnenen Betriebsprozesses und/oder Informationen über das aktuelle Betriebsprogramm und/oder Informationen über eine aktuelle Betriebstemperatur und dergleichen.

Unter einem Haushaltsgerät wird vorliegend ein Gerät verstanden, welches zur Haushaltsführung eingesetzt wird. Dies kann beispielsweise ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Dies kann aber auch ein Haushaltskleingerät sein, wie beispielsweise ein Kaffeevollautomat oder eine Küchenmaschine. Insbesondere wird unter dem Haushaltsgerät ein programmgesteuertes Gerät verstanden, dessen Betriebsprozesse gemäß abgelegten Betriebsprogrammen durchgeführt werden. Es erweist sich als besonders vorteilhaft, wenn das Haushaltsgerät ein Gerät zur Pflege von Wäschestücken oder ein Gerät zur Zubereitung von Lebensmitteln oder ein Gerät zur Reinigung von Geschirr oder ein Gerät zur Lagerung von Lebensmitteln bei vorgegebenen Temperaturen ist.

Wenn die Kommunikation über den Internet-Server erfolgt, so sind nun zwei verschiedene Ausführungsformen sinnvoll möglich: Zum einen kann auf dem Internet-Server eine Webseite in Form eines HTML-Codes abgelegt sein, welche der Benutzer auf seinem Benutzerendgerät abrufen kann. Die Fernsteuerung und/oder Fernüberwachung des Haushaltsgeräts erfolgt dann über diese Webseite, nämlich insbesondere mithilfe von bereitgestellten Bedienelementen der Webseite. Diese auf dem Server abgelegte Webseite stellt hier eine Benutzerschnittstelle zur Fernsteuerung und/oder Fernüberwachung des Haushaltsgeräts dar. Bei dieser Ausführungsform braucht auf dem Benutzerendgerät lediglich ein Browser installiert zu werden. Zum anderen kann auf dem Benutzerendgerät eine spezielle Anwendung bzw. Applikation installiert werden, welche auf dem Benutzerendgerät eine Benutzerschnittstelle bereitstellt und die Kommunikation mit dem Server ermöglicht. In beiden Fällen muss die Benutzerschnittstelle bzw. die Software zur Fernsteuerung und/oder Fernüberwachung nicht durch das Haushaltsgerät bereitgestellt werden, sondern ist auf dem Server und/oder dem Benutzerendgerät abgelegt.

Besonders bevorzugt erfolgt die Datenkommunikation zwischen dem Haushaltsgerät und dem Benutzerendgerät nach dem Internet-Protokoll. Dies bedeutet, dass die Steuerdaten und/oder die Statusdaten durch das jeweilige Gerät - Haushaltsgerät bzw. Benutzerendgerät - nach dem Internet-Protokoll erzeugt werden. Das Haushaltsgerät kann also nach dem Internet-Protokoll erzeugte Statusdaten senden und nach dem Internet-Protokoll erzeugte Steuerdaten empfangen. Hingegen kann das Benutzerendgerät nach dem Internet-Protokoll erzeugte Statusdaten des Haushaltsgeräts empfangen sowie Steuerdaten nach dem Internet-Protokoll erzeugen und senden. Diese Ausführungsform hat den Vorteil, dass auf ein zusätzliches Gateway verzichtet werden kann, wie es im Stand der Technik zur Übersetzung der Kommunikationsprotokolle eingesetzt wird. Das Haushaltsgerät kann somit direkt bzw. unmittelbar an das Internet angeschlossen bzw. angebunden werden, und die Daten müssen nicht mehr über ein Gateway übertragen werden. Die Nachrichtenübertragung kann somit uneingeschränkt erfolgen, weil die durch das Haushaltsgerät ausgesendeten/empfangenen Daten nicht mehr mittels eines Gateway "übersetzt" werden müssen, sodass sich auch die ständige Aktualisierung des Gateway aufgrund neuer Funktionalitäten bzw. neuer Nachrichten erübrigt. Zu diesem Zwecke kann das Haushaltsgerät mit einer entsprechenden Kommunikationseinheit ausgestattet sein, über welche das Haushaltsgerät an das Internet angeschlossen werden kann. Diese Kommunikationseinheit kann beispielsweise an ein lokales Netzwerk, insbesondere LAN, angeschlossen werden. Die Kommunikationseinheit kann zum drahtgebundenen Aussenden und Empfangen der nach dem Internet-Protokoll erzeugten Daten ausgebildet sein; in einer bevorzugten Ausführungsform wird jedoch eine Schnittstelle eingesetzt, welche zum drahtlosen Aussenden und Empfangen der Daten ausgebildet ist, nämlich zum Beispiel Wi-Fi (WLAN).

Die Sicherheit bei der Nachrichtenübertragung kann dadurch auf ein Maximum gebracht werden, dass zunächst erfindungsgemäß eine Registrierung des Haushaltsgeräts in dem Internet-Server vorgenommen wird, bevor die Datenkommunikation überhaupt durchgeführt wird. Im Internet-Server ist somit stets bekannt, welches Haushaltsgerät Teilnehmer der Datenkommunikation ist, sodass auch unbefugte Zugriffe verhindert werden können.

Hierbei erweist es sich als besonders vorteilhaft, wenn nach Aufbau einer Internet-Verbindung zwischen dem Haushaltsgerät und dem Internet-Server bzw. nach Anschließen des Haushaltsgeräts an das Internet die Registrierung selbstständig bzw. automatisch durch das Haushaltsgerät vorgenommen wird. Dies bedeutet insbesondere, dass die Registrierung des Haushaltsgeräts benutzerunabhängig erfolgen kann, also ohne dass der Benutzer sein Haushaltsgerät selbst registrieren muss. Einerseits ist diese Ausführungsform besonders benutzerfreundlich, weil der Benutzer keine speziellen Eingaben vornehmen muss; andererseits sorgt diese Ausführungsform auch für eine betriebssichere Registrierung des Haushaltsgeräts im Internet-Server, und es können Fehlregistrierungen verhindert werden.

Die Registrierung des Haushaltsgeräts erfolgt so, dass von dem Haushaltsgerät an den Internet-Server ein das Haushaltsgerät eindeutig kennzeichnendes Zeichen, nämlich eine MAC-Adresse des Haushaltsgeräts, übertragen wird, und zwar insbesondere automatisch durch das Haushaltsgerät. Dann kann von dem Haushaltsgerät an den Internet-Server auch ein vorbestimmtes Passwort übertragen werden, nämlich beispielsweise eine PIN oder dergleichen. Die Registrierung des Haushaltsgeräts kann auch durch Übertragung eines digitalen Zertifikats erfolgen. All diese Informationen werden von dem Internet-Server empfangen, und der Internet-Server kann überprüfen, ob das übertragene Zeichen und/oder das Passwort und/oder das digitale Zertifikat korrekt sind oder nicht. Nach erfolgreicher Überprüfung kann der Internet-Server die Datenübertragung freigeben; bei einer fehlgeschlagenen Registrierung hingegen kann die Datenkommunikation verhindert werden. Bei einer erfolgreichen Registrierung liegen somit im Internet-Server einerseits Informationen über das Kennzeichen - etwa die MAC-Adresse und/oder eine Seriennummer - des Haushaltsgeräts vor; andererseits liegen im Internet-Server auch Informationen über das Passwort vor.

Um einen unbefugten Zugriff zu verhindern, kann auch eine Registrierung des Benutzers in dem Internet-Server durchgeführt werden. Insbesondere kann der Benutzer auf dem Internet-Server sein eigenes Konto besitzen, welches mit einem vom Benutzer festgelegten Passwort geschützt ist. Somit wird ermöglicht, dass nur der Benutzer auf den Internet-Server zugreifen und die Fernsteuerung und/oder Fernüberwachung des Haushaltsgeräts vornehmen kann.

Erfindungsgemäß ist es vorgesehen, dass, bevor die Datenkommunikation zwischen dem Haushaltsgerät und dem Benutzerendgerät durchgeführt werden kann, in dem Internet-Server eine Zuordnung des Benutzers zu dem Haushaltsgerät vorgenommen wird. Dies bedeutet, dass das registrierte Haushaltsgerät dem Benutzer zugewiesen wird, sodass die Datenkommunikation zwischen dem Benutzerendgerät und dem Haushaltsgerät über den Internet-Server ermöglicht wird. Diese Ausführungsform beruht auf der Tatsache, dass alleine die Registrierung des Haushaltsgeräts und die Registrierung des Benutzers für eine erfolgreiche Datenkommunikation zwischen dem Benutzerendgerät und dem Haushaltsgerät nicht ausreicht, sondern zusätzlich noch eine Zuweisung des registrierten Benutzers zu dem registrierten Haushaltsgerät in dem Internet-Server vorgenommen werden muss. Dies kann beispielsweise so aussehen, dass nach erfolgreichem Einloggen auf dem Internet-Server (hier kann beispielsweise eine spezifische Internet-Seite und/oder eine spezielle Applikation bereitgestellt werden) der Benutzer eine Mehrzahl von ihm zugeordneten Haushaltsgeräten dargestellt bekommt, mit denen die Datenkommunikation durchgeführt werden kann. Der Benutzer kann eines dieser Haushaltsgeräte auswählen und beispielsweise die Steuerdaten an dieses ausgewählte Haushaltsgerät übertragen.

Die Zuordnung des Benutzers zu dem Haushaltsgerät beinhaltet bevorzugt, dass an dem Benutzerendgerät ein das Haushaltsgerät eindeutig kennzeichnendes Zeichen, insbesondere die genannte MAC-Adresse des Haushaltsgeräts und/oder seine Seriennummer, durch den Benutzer eingegeben wird und dieses Zeichen dann von dem Benutzerendgerät an den Internet-Server übertragen wird. Ergänzend oder alternativ kann der Benutzer auch ein Passwort an dem Benutzerendgerät eingeben, welches dann von dem Benutzerendgerät an den Internet-Server übertragen wird. All diese Daten können beispielsweise an einem Gerätegehäuse des Haushaltsgeräts angebracht sein oder aber in einer Bedienungsanleitung angegeben sein. Somit kann eine eindeutige Zuordnung des Haushaltsgeräts zu dem Benutzer erfolgen, welche außerdem auch besonders sicher - nämlich passwortgeschützt - durchgeführt werden kann.

Es kann auch vorkommen, dass zu dem Haushaltsgerät bereits eine Zuordnung zu einem anderen (alten) Benutzer in dem Internet-Server besteht. Eine solche ältere Zuordnung kann beispielsweise deshalb vorliegen, weil der Benutzer das Haushaltsgerät als gebrauchtes Gerät erworben hat. In einer Ausführungsform wird somit dem neuen Benutzer die Möglichkeit gegeben, diese alte Zuordnung zu verwerfen, sodass das Haushaltsgerät dem neuen Benutzer im Internet-Server zugewiesen werden kann. Es kann also vorgesehen sein, dass vor der Zuordnung des Benutzers zu dem Haushaltsgerät eine bereits bestehende Zuordnung des Haushaltsgeräts zu einem anderen Benutzer im Internet-Server verworfen wird. Dieses Verwerfen der alten Zuordnung erfolgt vorzugsweise aufgrund einer Eingabe des Benutzers, nämlich insbesondere an dem Haushaltsgerät. An dem Haushaltsgerät kann nämlich ein Reset-Bedienelement bereitgestellt sein, bei dessen Betätigung von dem Haushaltsgerät an den Internet-Server Daten gesendet werden, aufgrund derer die bereits veraltete Zuordnung gelöscht wird. Um ein ungewolltes Löschen dieser Zuordnung zu verhindern, kann vorgesehen sein, dass der Benutzer dieses Reset-Bedienelement für eine vorbestimmte Zeitdauer - etwa 3 oder 4 oder 5 oder 6 Sekunden - gedrückt halten soll, damit die Daten an den Internet-Server übertragen werden.

Wird hingegen die veraltete Zuordnung nicht gelöscht, so wird vorzugsweise auch die neue Zuordnung verhindert. In einer Ausführungsform ist nämlich vorgesehen, dass vor der Zuordnung des Haushaltsgeräts zu dem neuen Benutzer in dem Internet-Server überprüft wird, ob eine bereits bestehende Zuordnung zu einem anderen Benutzer vorliegt, und die Zuordnung zu dem neuen Benutzer ausschließlich unter der Voraussetzung des Fehlens einer bereits bestehenden Zuordnung vorgenommen wird. Die Zuordnung zu dem neuen Benutzer kann somit nur dann erfolgen, wenn keine Zuweisung zu einem anderen Benutzer festgestellt wird. Eine derartige Vorgehensweise ist besonders sicher und verhindert, dass sich unbefugte Dritte den Zugang zu den Daten verschaffen können.

Erfindungsgemäß wird die Zuordnung zu dem Benutzer nur dann durchgeführt, wenn der Benutzer eine Bestätigungseingabe vornimmt, mit welcher durch den Benutzer bestätigt wird, dass er einen physikalischen Zugang zu dem Haushaltsgerät besitzt. Somit wird erreicht, dass die Zuordnung ausschließlich zu dem tatsächlichen Besitzer des Haushaltsgeräts ermöglicht wird, der auch den tatsächlichen Zugang zu dem Haushaltsgerät hat bzw. die tatsächliche Herrschaft über das Haushaltsgerät besitzt. Auch somit kann die Sicherheit auf ein Maximum gebracht werden, und es kann verhindert werden, dass sich unbefugte Dritte den Zugang zu den Gerätedaten verschaffen.

Grundsätzlich kann die Bestätigungseingabe an dem Benutzerendgerät vorgenommen werden, wenn das Benutzerendgerät ein Teil des lokalen Netzwerks ist. Es erweist sich jedoch als besonders vorteilhaft, wenn diese Bestätigungseingabe an dem Haushaltsgerät selbst vorgenommen wird. Somit wird durch den Benutzer auch gleichzeitig angezeigt, dass er den physikalischen bzw. tatsächlichen Zugang zu dem Haushaltsgerät hat.

Ein erfindungsgemäßes Haushaltsgerät ist zum Durchführen eines erfindungsgemäßen Verfahrens ausgebildet.

Ein erfindungsgemäßes System beinhaltet ein Haushaltsgerät sowie ein Benutzerendgerät, wobei im Rahmen einer Datenkommunikation zwischen dem Haushaltsgerät und dem Benutzerendgerät Steuerdaten mit Steuerbefehlen an das Haushaltsgerät und/oder Statusdaten mit Informationen über einen aktuellen Zustand des Haushaltsgeräts von dem Haushaltsgerät an das Benutzerendgerät übertragen werden, und wobei die Datenkommunikation zumindest abschnittsweise über das Internet durchführbar ist. Das System weist einen Internet-Server auf, über welchen die Datenkommunikation zwischen dem Haushaltsgerät und dem Benutzerendgerät durchführbar ist.

Die mit Bezug auf das erfindungsgemäße Verfahren vorgestellten bevorzugten Ausführungsformen und deren Vorteile gelten entsprechend für das erfindungsgemäße Haushaltsgerät sowie für das erfindungsgemäße System.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung ein System gemäß einer Ausführungsform der Erfindung; und
- Fig. 2: ein Flussdiagramm eines Verfahrens gemäß einer Ausführungsform der Erfindung.

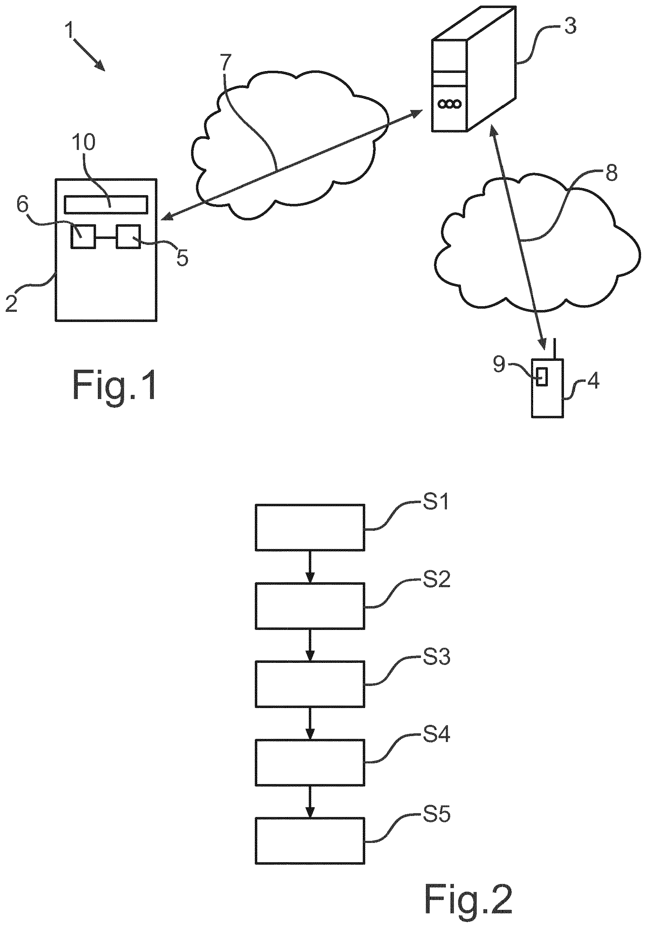

Ein in Fig. 1 dargestelltes System 1 beinhaltet ein Haushaltsgerät 2, einen Internet-Server 3, wie auch ein Benutzerendgerät 4, nämlich beispielsweise ein Mobiltelefon. Das Haushaltsgerät 2 kann beispielsweise ein Haushaltsgroßgerät sein, etwa ein Gerät zur Pflege von Wäschestücken oder ein Gerät zur Zubereitung von Lebensmitteln oder eine Geschirrspülmaschine. Das Haushaltsgerät 2 beinhaltet eine Kommunikationseinheit 5, welche zur Kommunikation mit dem Benutzerendgerät 4 ausgebildet ist, und zwar über den Internet-Server 3. Die Kommunikationseinheit 5 kommuniziert dabei nach dem Internet-Protokoll (IP) und kann somit Daten gemäß dem Internet-Protokoll erzeugen sowie nach dem Internet-Protokoll bereitgestellte Daten empfangen und verarbeiten. Dies bedeutet, dass das Haushaltsgerät 2 direkt an das Internet angeschlossen werden kann, gegebenenfalls auch über einen Internet-Router. Es ist somit kein Gateway erforderlich. Die Kommunikationseinheit 5 ist innerhalb des Haushaltsgeräts 2 auch mit einer Steuereinrichtung 6 des Haushaltsgeräts 2 elektrisch gekoppelt und kann mit dieser kommunizieren. Die Steuereinrichtung 6 kann beispielsweise einen Mikrocontroller, einen digitalen Signalprozessor sowie einen Speicher beinhalten. Die Steuereinrichtung 6 kann eine zentrale Steuereinheit des Haushaltsgeräts 2 sein, welche die Betriebsprozesse des Haushaltsgeräts 2 steuert, nämlich gemäß abgelegten Betriebsprogrammen. Es ist also die Steuereinrichtung 6, welche über die Kommunikationseinheit 5 mit dem Server 3 kommuniziert.

Der Internet-Server 3 ist beispielsweise ein Server-Rechner, welcher bei einem Hersteller des Haushaltsgeräts 2 bereitgestellt ist. Auch dieser Internet-Server 3 ist an das Internet angeschlossen, sodass eine Internet-Verbindung 7 zwischen dem Internet-Server 3 und dem Haushaltsgerät 2 aufgebaut werden kann. Eine entsprechende Internet-Verbindung 8 kann auch zwischen dem Internet-Server 3 und dem Benutzerendgerät 4 aufgebaut werden. Dies kann so aussehen, dass der Server 3 die Kommunikation zwischen dem Benutzerendgerät 4 und dem Haushaltsgerät 2 koordiniert, so dass das Haushaltsgerät 2 und das Benutzerendgerät 4 lediglich den Server 3 "sehen" und der Server 3 die Nachrichten zwischen dem Haushaltsgerät 2 und dem Benutzerendgerät 4 vermittelt.

Das Benutzerendgerät 4 besitzt nämlich eine entsprechende Kommunikationseinheit 9, welche zur drahtlosen Kommunikation über das Internet ausgebildet ist. Auch die Kommunikationseinheit 9 kann nach dem Internet-Protokoll kommunizieren.

Im Ausführungsbeispiel gemäß Fig. 1 ist das Benutzerendgerät 4 ein Mobiltelefon. Die Erfindung ist jedoch nicht auf eine bestimmte Ausgestaltung des Benutzerendgeräts 4 beschränkt. Bei dem Benutzerendgerät 4 kann es sich auch um andere Endgeräte handeln, wie etwa ein Notebook, ein PDA oder dergleichen. Entscheidend ist lediglich, dass das Benutzerendgerät 4 über eine Kommunikationseinheit 9 verfügt, welche zur Kommunikation bzw. zur Nachrichtenübertragung über das Internet ausgebildet ist.

Die Datenkommunikation zwischen dem Haushaltsgerät 2 und dem Benutzerendgerät 4 erfolgt also unter Vermittlung des Internet-Servers 3. Eine solche Datenkommunikation ist besonders sicher und schützt das Haushaltsgerät 2 vor Fremdeingriffen bzw. vor dem Eingriff unbefugter Dritter. Einerseits können von dem Haushaltsgerät 2 an das Benutzerendgerät 4 Statusdaten übertragen werden, welche Informationen über den aktuellen Zustand des Haushaltsgeräts 2 beinhalten. Diese Statusdaten können beispielsweise Informationen über die Restzeit beinhalten, welche bis zum Ende eines Betriebsprozesses des Haushaltsgeräts 2 verstreichen muss. Die Statusdaten können auch Informationen über das ausgewählte Betriebsprogramm des Haushaltsgeräts 2 umfassen. Auf der anderen Seite können unter Vermittlung des Internet-Servers 3 Steuerdaten an das Haushaltsgerät 2 übertragen werden, welche durch die Steuereinrichtung 6 des Haushaltsgeräts 2 empfangen werden. Die Steuerdaten können einen Befehl umfassen, aufgrund dessen die Steuereinrichtung 6 des Haushaltsgeräts 2 einen Betriebsprozess startet. Die Steuerdaten können aber auch einen Steuerbefehl beinhalten, durch welchen ein bestimmtes Betriebsprogramm ausgewählt wird, gemäß welchem der Betriebsprozess durchgeführt wird.

Zur Steuerung des Haushaltsgeräts 2 über den Internet-Server 3 können unterschiedliche Ausführungsformen vorgesehen sein. Zum einen kann im Internet-Server 3 eine Benutzerschnittstelle - etwa in Form einer Website - abgelegt sein, welche auf dem Benutzerendgerät 4 abgerufen werden kann. Dazu braucht der Benutzer lediglich einen Browser, welcher auf dem Benutzerendgerät 4 installiert werden kann. Zum anderen ist es auch möglich, auf dem Benutzerendgerät 4 eine spezielle Applikation zu installieren, mit welcher eine entsprechende Benutzerschnittstelle auf dem Benutzerendgerät 4 bereitgestellt wird. Über diese Benutzerschnittstelle kann der Benutzer dann mit dem Internet-Server 3 kommunizieren, welcher wiederum dann die Steuerdaten an das Haushaltsgerät 2 sendet.

Bezugnehmend nun auf Fig. 2 wird ein Verfahren gemäß einer Ausführungsform der Erfindung näher erläutert. In einem ersten Schritt S1 wird das Haushaltsgerät 2 an das Internet angeschlossen, sodass die Internet-Verbindung zum Internet-Server 3 bereitgestellt wird. In einem nachfolgenden Schritt S2 erfolgt eine automatische Registrierung des Hauhaltsgeräts 2 im Server 3. Hierbei sendet das Haushaltsgerät 2 automatisch bzw. alleine aufgrund der Internet-Verbindung 7 folgende Daten an den Server 3:
- ein spezifisches Zeichen des Haushaltsgeräts 2, nämlich beispielsweise die eigene MAC-Adresse des Haushaltsgeräts 2, sowie
- ein vorbestimmtes, in der Steuereinrichtung 6 abgelegtes Passwort.

Der Server 3 überprüft die empfangenen Daten und speichert sie in einem Speicher. Somit ist das Haushaltsgerät 2 registriert und kann über den Server 3 gesteuert werden sowie an den Server 3 die genannten Statusdaten übertragen.

In einem weiteren Schritt S3 erfolgt eine Registrierung des Benutzers auf dem Server 3. Dies bedeutet, dass eine Identifizierung des Benutzers stattfindet bzw. der Benutzer sein eigenes Account auf dem Server 3 eröffnet, welches vorzugsweise mit einem eigenen Passwort geschützt ist. Der Benutzer bekommt auf dem Server 3 also eine eigene Website, auf welcher alle Informationen betreffend den Benutzer sowie alle Haushaltsgeräte des Benutzers abgespeichert sind. Über sein Account kann der Benutzer die Steuerung des Haushaltsgeräts 2 vornehmen, wie auch die vom Haushaltsgerät 2 gesendeten Statusdaten abfragen. Wie bereits ausgeführt, sind hier zwei Vorgehensweisen möglich: Einerseits kann der Benutzer auf seinem Benutzerendgerät 4 eine im Server 3 gespeicherte Website abrufen und sich über diese Website einloggen. Andererseits kann auf dem Benutzerendgerät 4 auch eine entsprechende Applikation installiert sein, welche eine Benutzerschnittstelle auf dem Benutzerendgerät 4 bereitstellt, über welche die Kommunikation mit dem Server 3 erfolgt.

Bevor eine Fernsteuerung des Haushaltsgeräts 2 erfolgen kann, wird zunächst in einem weiteren Schritt S4 eine Zuordnung des Haushaltsgeräts 2 zu dem Benutzer bzw. zu seinem Account auf dem Server 3 vorgenommen. Dies ist erforderlich, weil auf dem Server 3 eine Vielzahl von Haushaltsgeräten sowie ebenfalls eine Vielzahl von Benutzern registriert sein können, sodass eine entsprechende Zuweisung jedes Haushaltsgeräts zu einem bestimmten Benutzer vorgenommen werden muss. Um das Haushaltsgerät 2 auf dem Server 3 dem Benutzer zuzuweisen, sendet der Benutzer das das Haushaltsgerät 2 kennzeichnende Zeichen - etwa die MAC-Adresse bzw. eine Seriennummer - an den Server 3 durch Vornahme einer entsprechenden Eingabe an dem Benutzerendgerät 4. Der Benutzer kann auch ein spezifisches, beispielsweise an dem Gehäuse des Haushaltsgeräts 2 angebrachtes oder aber in einer Bedienungsanleitung angegebenes Passwort an dem Benutzerendgerät 4 eingeben und auch dieses Passwort an den Server 3 senden. Der Server 3 vergleicht dann die empfangenen Daten mit den abgelegten Daten des Haushaltsgeräts 2 und weist das Haushaltsgerät 2 dem neuen Benutzer zu. Diese Zuweisung erfolgt vorzugsweise unter folgenden Voraussetzungen: einerseits unter der Voraussetzung, dass in dem Server 3 keine bereits bestehende Zuordnung zu einem anderen Benutzer vorliegt, und andererseits unter der Voraussetzung, dass der Benutzer eine Bestätigungseingabe vornimmt, mit welcher bestätigt wird, dass der Benutzer einen physikalischen Zugang zu dem Haushaltsgerät 2 besitzt. Diese Bestätigungseingabe wird bevorzugt an einer Bedienblende 10 des Haushaltsgeräts 2 vorgenommen. Um die Zuweisung des Haushaltsgeräts 2 zu dem neuen Benutzer auch bei Vorliegen einer älteren Zuordnung zu ermöglichen, kann der Benutzer die bereits bestehende Zuordnung mithilfe eines Bedienelements des Haushaltsgeräts 2 verwerfen. Dieses Bedienelement kann beispielsweise an der Bedienblende 10 angeordnet sein. Das Bedienelement stellt einen Reset-Knopf dar, welcher für eine vorbestimmte Zeitdauer gedrückt gehalten werden muss, damit das Haushaltsgerät 2 an den Server 3 Daten überträgt, aufgrund derer die bereits bestehende Zuordnung zu einem anderen Benutzer gelöscht wird. Dann steht der Zuweisung des Haushaltsgeräts 2 zu dem neuen Benutzer nichts mehr im Wege.

Ist das Haushaltsgerät 2 dem Benutzer zugewiesen, so kann in einem weiteren Schritt S5 eine Fernsteuerung des Haushaltsgeräts 2 erfolgen. Hierzu kann sich der Benutzer auf dem Server 3 mittels des Benutzerendgeräts 4 einloggen und in seinem Account unterschiedlichste Steuerungsvorgänge des Haushaltsgeräts 2 bewirken. Beispielsweise kann der Benutzer ein bestimmtes Betriebsprogramm des Haushaltgeräts 2 auswählen und einen Betriebsprozess des Haushaltsgeräts 2 gemäß dem ausgewählten Programm starten. Auf seinem Benutzerendgerät 4 kann der Benutzer auch den gesamten Betriebsprozess des Haushaltsgeräts 2 überwachen. Wie bereits ausgeführt, sendet das Haushaltsgerät 2 Statusdaten an den Server 3, welche mittels des Benutzerendgeräts 4 abgerufen werden können. Der Benutzer kann somit darüber informiert werden, in welchem Abschnitt des Programms sich das Haushaltsgerät 2 befindet und wie viel Restzeit noch bis zum Abschluss des Betriebsprozesses verblieben ist. Der Benutzer kann auch jederzeit den Betriebsprozess unterbrechen, nämlich beispielsweise durch Betätigen eines in der Benutzerschnittstelle bereitgestellten Bedienelements. Bei einer solchen Kommunikation kommunizieren das Benutzerendgerät 4 und das Haushaltsgerät 2 tatsächlich lediglich mit dem Server 3. Da jedoch der Server 3 die Daten weiterleitet bzw. vermittelt, kann festgestellt werden, dass die Kommunikation zwischen dem Haushaltsgerät 2 einerseits und dem Benutzerendgerät 4 andererseits erfolgt, und zwar unter Vermittlung des Servers 3. Die Kommunikationsverbindung wird insbesondere durch das Haushaltsgerät 2 initialisiert, und zwar nachdem das Haushaltsgerät 2 eingeschaltet bzw. aktiviert wird.

### Bezugszeichenliste

- 1: System
- 2: Haushaltsgerät
- 3: Internet-Server
- 4: Benutzerendgerät
- 5: Kommunikationseinheit
- 6: Steuereinrichtung
- 7: Internet-Verbindung
- 8: Internet-Verbindung
- 9: Kommunikationseinheit
- 10: Bedienblende
- S1, S2, S3, S4, S5: Schritte

## Patentansprüche

1. Verfahren zur Datenkommunikation zwischen einem Haushaltsgerät (2) und einem Benutzerendgerät (4) eines Benutzers des Haushaltsgeräts (2),
- wobei im Rahmen der Datenkommunikation Steuerdaten mit Steuerbefehlen von dem Benutzerendgerät (4) an das Haushaltsgerät (2) und/oder Statusdaten mit Informationen über einen aktuellen Zustand des Haushaltsgeräts (2) von dem Haushaltsgerät (2) an das Benutzerendgerät (4) übertragen werden;
- und über einen Internet-Server (3) die Datenkommunikation zwischen dem Haushaltsgerät (2) und dem Benutzerendgerät (4) zumindest abschnittsweise über das Internet durchgeführt wird;
- wobei eine Registrierung des Haushaltsgeräts (2) und eine Zuordnung des Benutzers zu dem Haushaltsgerät (2) in dem Internet-Server (3) vorgenommen wird, bevor die Datenkommunikation durchgeführt wird; und
- die Registrierung des Haushaltsgeräts (2) beinhaltet, dass von dem Haushaltsgerät (2) an den Internet-Server (3) eine das Haushaltsgerät (2) eindeutig kennzeichnende MAC-Adresse des Haushaltsgeräts (2) übertragen wird,
**dadurch gekennzeichnet, dass**
- die Zuordnung zu dem Benutzer ausschließlich unter der Voraussetzung durchgeführt wird, dass der Benutzer an dem Haushaltsgerät (2) eine Bestätigungseingabe vornimmt, mit welcher durch den Benutzer bestätigt wird, dass der Benutzer einen physikalischen Zugang zu dem Haushaltsgerät (2) besitzt.

2. Verfahren nach Anspruch 1, **dadurch gekennzeichnet, dass** die Datenkommunikation zwischen dem Haushaltsgerät (2) und dem Benutzerendgerät (4) nach dem Internet-Protokoll erfolgt, so dass die Steuerdaten und/oder die Statusdaten nach dem Internet-Protokoll erzeugt werden.

3. Verfahren nach Anspruch 1 oder 2, **dadurch gekennzeichnet, dass** nach Aufbau einer Internetverbindung (7) zwischen dem Haushaltsgerät (2) und dem Internet-Server (3) die Registrierung selbstständig durch das Haushaltsgerät (2) vorgenommen wird.

4. Verfahren nach einem der vorherigen Ansprüche, **dadurch gekennzeichnet, dass** die Registrierung des Haushaltsgeräts (2) beinhaltet, dass:
- von dem Haushaltsgerät (2) an den Internet-Server (3) ein vorbestimmtes Passwort übertragen wird.

5. Verfahren nach einem der vorhergehenden Ansprüche, **dadurch gekennzeichnet, dass**, bevor die Datenkommunikation zwischen dem Haushaltsgerät (2) und dem Benutzerendgerät (4) durchgeführt wird, eine Registrierung des Benutzers in dem Internet-Server (3) durchgeführt wird.

6. Verfahren nach einem der vorhergehenden Ansprüche, **dadurch gekennzeichnet, dass** die Zuordnung des Benutzers zu dem Haushaltsgerät (2) beinhaltet, dass:
- an dem Benutzerendgerät (4) ein das Haushaltsgerät (2) eindeutig kennzeichnendes Zeichen, insbesondere eine MAC-Adresse des Haushaltsgeräts (2), durch den Benutzer eingegeben wird und dieses Zeichen von dem Benutzerendgerät (4) an den Internet-Server (3) übertragen wird und/oder
- an dem Benutzerendgerät (4) ein Passwort durch den Benutzer eingegeben wird und dieses Passwort von dem Benutzerendgerät (4) an den Internet-Server (3) übertragen wird.

7. Verfahren nach einem der vorhergehenden Ansprüche, **dadurch gekennzeichnet, dass** vor der Zuordnung des Benutzers zu dem Haushaltsgerät (2) eine bereits bestehende Zuordnung des Haushaltsgeräts (2) zu einem anderen Benutzer im Internet-Server (3) aufgrund einer Eingabe des Benutzers, insbesondere an dem Haushaltsgerät (2), verworfen wird.

8. Verfahren nach einem der vorhergehenden Ansprüche, **dadurch gekennzeichnet, dass** vor der Zuordnung des Haushaltsgeräts (2) zu dem neuen Benutzer in dem Internet-Server (3) überprüft wird, ob eine bereits bestehende Zuordnung zu einem anderen Benutzer vorliegt, und die Zuordnung zu dem neuen Benutzer ausschließlich unter der Voraussetzung des Fehlens einer bereits bestehenden Zuordnung vorgenommen wird.

9. System (1), welches ein Haushaltsgerät (2) und ein Benutzerendgerät (4) umfasst, wobei im Rahmen einer Datenkommunikation zwischen dem Haushaltsgerät (2) und dem Benutzerendgerät (4) Steuerdaten mit Steuerbefehlen von dem Benutzerendgerät (4) an das Haushaltsgerät (2) und/oder Statusdaten mit Informationen über einen aktuellen Zustand des Haushaltsgeräts (2) von dem Haushaltsgerät (2) an das Benutzerendgerät (4) übertragbar sind, **dadurch gekennzeichnet, dass** das System zusätzlich einen Internet-Server (3) umfasst, über welchen die Datenkommunikation zwischen dem Haushaltsgerät (2) und dem Benutzerendgerät (4) zumindest abschnittsweise über das Internet durchführbar ist, wobei das System (1) zum Durchführen eines Verfahrens nach einem der vorhergehenden Ansprüche ausgebildet ist.

## Claims

1. Method for communicating data between a domestic appliance (2) and a user terminal (4) of a user of said domestic appliance (2),
- wherein in the course of said data communication, control data comprising control commands is transmitted from the user terminal (4) to the domestic appliance (2) and/or status data comprising information on a current state of the domestic appliance (2) is transmitted from the domestic appliance (2) to the user terminal (4);
- and the data communication between the domestic appliance (2) and the user terminal (4) takes place at least partially over the Internet, via an Internet server (3);
- wherein the domestic appliance (2) is registered and the user is allocated to the domestic appliance (2) in the Internet server (3) before the data communication takes place; and
- the registration of the domestic appliance (2) includes a characteristic MAC address of the domestic appliance (2) being transmitted from the domestic appliance (2) to the Internet server (3),
**characterised in that**
- the allocation to the user is made only provided that the user inputs a confirmation at the domestic appliance (2) with which the user confirms that the user has physical access to the domestic appliance (2).

2. Method according to claim 1, **characterised in that** the data communication between the domestic appliance (2) and the user terminal (4) occurs in accordance with the Internet protocol, so the control data and/or the status data is/are generated in accordance with the Internet protocol.

3. Method according to claim 1 or 2, **characterised in that** after establishing an Internet connection (7) between the domestic appliance (2) and the Internet server (3) registration is independently performed by the domestic appliance (2).

4. Method according to one of the preceding claims, **characterised in that** registration of the domestic appliance (2) includes:
- a predetermined password being transmitted from the domestic appliance (2) to the Internet server (3).

5. Method according to one of the preceding claims, **characterised in that** before the data communication between the domestic appliance (2) and the user terminal (4) takes place, the user is registered in the Internet server (3).

6. Method according to one of the preceding claims, **characterised in that** the allocation of the user to the domestic appliance (2) includes:
- a mark uniquely characterising the domestic appliance (2), in particular a MAC address of the domestic appliance (2), being input by the user at the user terminal (4) and this mark being transmitted from the user terminal (4) to the Internet server (3) and/or- a password being input by the user at the user terminal (4) and this password being transmitted from the user terminal (4) to the Internet server (3).

7. Method according to one of the preceding claims, **characterised in that** before the allocation of the user to the domestic appliance (2), an existing allocation of the domestic appliance (2) to another user in the Internet server (3) is discarded owing to an input by the user, in particular at the domestic appliance (2).

8. Method according to one of the preceding claims, **characterised in that** before the allocation of the domestic appliance (2) to the new user, a check is made in the Internet server (3) as to whether there is an existing allocation to another user, and the allocation to the new user is made only provided that there is no existing allocation.

9. System (1) comprising a domestic appliance (2) and a user terminal (4), wherein in the course of data communication between the domestic appliance (2) and the user terminal (4), control data comprising control commands can be transmitted from the user terminal (4) to the domestic appliance (2) and/or status data comprising information on a current state of the domestic appliance (2) can be transmitted from the domestic appliance (2) to the user terminal (4), **characterised in that** the system additionally comprises an Internet server (3) via which the data communication between the domestic appliance (2) and the user terminal (4) can take place at least partially over the Internet, wherein the system (1) is embodied to carry out a method according to one of the preceding claims.

## Revendications

1. Procédé de communication de données entre un appareil ménager (2) et un terminal utilisateur (4) d'un utilisateur de l'appareil ménager (2),
- dans lequel, dans le cadre de la communication de données, des données de commande comprenant des instructions de commande sont transmises à l'appareil ménager (2) par le terminal utilisateur (4) et/ou des données d'état comprenant des informations sur un état actuel de l'appareil ménager (2) sont transmises au terminal utilisateur (4) par l'appareil ménager (2) ;
- et dans lequel, par l'intermédiaire d'un serveur Internet (3), la communication de données entre l'appareil ménager (2) et le terminal utilisateur (4) est réalisée au moins par sections par l'intermédiaire d'Internet ;
- dans lequel un enregistrement de l'appareil ménager (2) et une attribution de l'utilisateur à l'appareil ménager (2) sont réalisés sur le serveur Internet (3) avant que la communication de données ne soit effectuée ; et
- dans lequel l'enregistrement de l'appareil ménager (2) implique qu'une adresse MAC de l'appareil ménager (2), caractérisant l'appareil ménager (2) de manière distincte, soit transmise au serveur Internet (3) par l'appareil ménager (2),
**caractérisé en ce que**
- l'attribution à l'utilisateur est réalisée uniquement à condition que l'utilisateur exécute une entrée de confirmation à l'appareil ménager (2), avec laquelle il est confirmé par l'utilisateur que l'utilisateur possède un accès physique à l'appareil ménager (2).

2. Procédé selon la revendication 1, **caractérisé en ce que** la communication de données entre l'appareil ménager (2) et le terminal utilisateur (4) est réalisée suivant le protocole Internet, de sorte que les données de commande et/ou les données d'état sont générées selon le protocole Internet.

3. Procédé selon la revendication 1 ou 2, **caractérisé en ce qu'**après l'établissement d'une liaison Internet (7) entre l'appareil ménager (2) et le serveur Internet (3), l'enregistrement est réalisé automatiquement par l'appareil ménager (2).

4. Procédé selon l'une quelconque des revendications précédentes, **caractérisé en ce que** l'enregistrement de l'appareil ménager (2) implique qu'
- un mot de passe prédéfini soit transmis au serveur Internet (3) par l'appareil ménager (2).

5. Procédé selon l'une quelconque des revendications précédentes, **caractérisé en ce qu'**avant que la communication de données ne soit exécutée entre l'appareil ménager (2) et le terminal utilisateur (4), un enregistrement de l'utilisateur est effectué sur le serveur Internet (3).

6. Procédé selon l'une quelconque des revendications précédentes, **caractérisé en ce que** l'attribution de l'utilisateur à l'appareil ménager (2) implique qu'
- un signe caractérisant l'appareil ménager (2) de manière distincte, notamment une adresse MAC de l'appareil ménager (2), soit entré par l'utilisateur sur le terminal utilisateur (4) et que ce signe soit transmis au serveur Internet (3) par le terminal utilisateur (4), et/ou
- qu'un mot de passe soit entré par l'utilisateur sur le terminal utilisateur (4), et que ce mot de passe soit transmis au serveur Internet (3) par le terminal utilisateur (4).

7. Procédé selon l'une quelconque des revendications précédentes, **caractérisé en ce qu'**avant l'attribution de l'utilisateur à l'appareil ménager (2), une attribution déjà existante de l'appareil ménager (2) à un autre utilisateur soit rejetée sur le serveur Internet (3) en raison d'une entrée de l'utilisateur, notamment à l'appareil ménager (2).

8. Procédé selon l'une quelconque des revendications précédentes, **caractérisé en ce qu'**avant l'attribution de l'appareil ménager (2) au nouvel utilisateur, il est vérifié sur le serveur Internet (3) si une attribution déjà existante est présente pour un autre utilisateur, et **en ce que** l'attribution au nouvel utilisateur est réalisée uniquement à condition de l'absence d'une attribution déjà existante.

9. Système (1) qui comprend un appareil ménager (2) et un terminal utilisateur (4), dans lequel, dans le cadre d'une communication de données entre l'appareil ménager (2) et le terminal utilisateur (4), des données de commande comprenant des instructions de commande peuvent être transmises par le terminal utilisateur (4) à l'appareil ménager (2) et/ou des données d'état comprenant des informations sur un état actuel de l'appareil ménager (2) peuvent être transmises au terminal utilisateur (4) par l'appareil ménager (2), **caractérisé en ce que** le système comprend en outre un serveur Internet (3) par l'intermédiaire duquel la communication de données entre l'appareil ménager (2) et le terminal utilisateur (4) peut être réalisée par l'intermédiaire d'Internet au moins par sections, dans lequel le système (1) est réalisé pour réaliser un procédé selon l'une quelconque des revendications précédentes.
